# EUROPEAN PATENT SPECIFICATION

(11) **EP 2 070 614 B1**
(45) Date of publication and mention of the grant of the patent: **09.10.2013**
(21) Application number: 07829416.2
(22) Date of filing: 09.10.2007
(51) Int. Cl.: B23B 25/00, B23B 5/16, B23Q 11/00

(54) **PLUG MEMBER AND ATTACHMENT/DETACHMENT DEVICE FOR THE SAME**
STOPFENGLIED UND BEFESTIGUNGS-/TRENNVORRICHTUNG DAFÜR
ORGANE OBTURATEUR ET DISPOSITIF DE FIXATION/SÉPARATION DE CET ORGANE

(30) Priority: 06.10.2006 JP 2006275317
(43) Date of publication of application: 17.06.2009
(73) Proprietor: Nippon Steel & Sumitomo Metal Corporation, Tokyo 100-8071 (JP)
(72) Inventor: KUSUDA, Hiroki, Osaka-shi Osaka 5410041 (JP); KASA, Yasuhisa, Osaka-shi Osaka 5410041 (JP); TANIDA, Mutsumi, Osaka-shi Osaka 5410041 (JP); FUJISAKA, Tadayoshi, Wakayama-shi Wakayama 6408404 (JP); YAMASAKI, Hisao, Wakayama-shi Wakayama 6408404 (JP)
(74) Representative: Jackson, Martin Peter
(86) International application number: PCT/JP2007/069678
(87) International publication number: WO 2008/044676

(56) References cited:
- EP-A1- 0 497 043
- JP-A- 7 171 701
- JP-A- 03 170 203
- JP-A- 07 171 701
- JP-A- 2002 098 291
- JP-U- 61 191 848
- US-A- 4 462 430
- US-A- 5 779 085

## Description

### Technical Field

This invention relates to a plug member and a mounting and dismounting device therefor according to the preambles of claims 1 and 3, an exemplary plug and mounting and dismounting device are known from EP-A1-0 497 043. Specifically, the present invention relates to a plug member which is mounted inside an end portion of a long pipe such as an oil country tubular good when carrying out thread cutting on the pipe in order to prevent shavings and the like formed during the thread cutting from entering the pipe, and a device for mounting the plug member in a pipe or dismounting or removing it from a pipe.

### Background Art

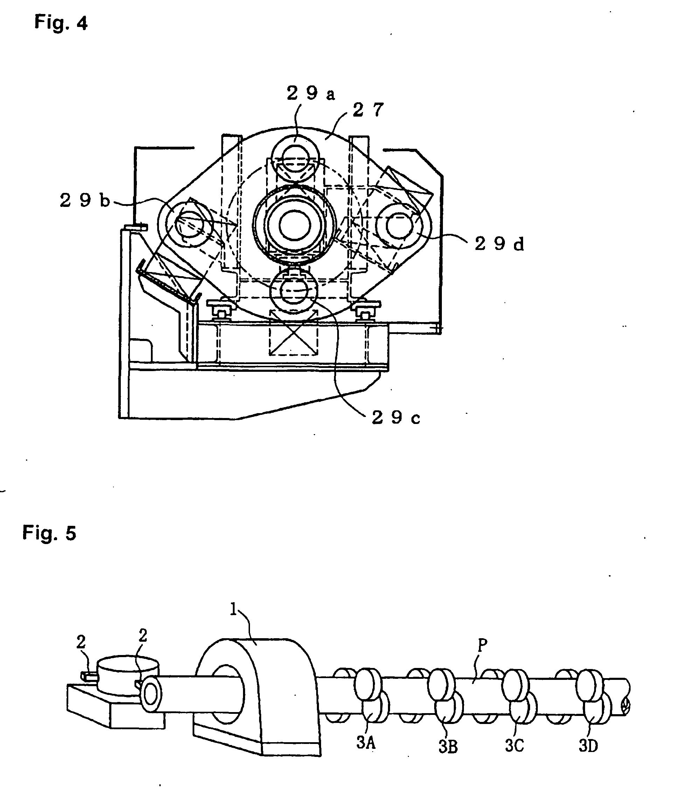

Figure 5 is an explanatory view showing thread cutting being carried out on an end of a long pipe such as an oil country tubular good. As shown in Figure 5, during thread cutting, the vicinity of an end of a pipe P which is undergoing thread cutting is rotatably supported by a chuck 1. Thread cutting is carried out by contacting the portion of the end of the pipe P to undergo thread cutting with a cutting tool 2 which can be adjusted in position relative to the pipe P as the pipe P is being rotated.

During this thread cutting operation, if shavings caused by the cutting or cutting oil enter into the rear of the interior of a long pipe such as an oil country tubular good, the shavings are not only difficult to remove but extra effort is required for their removal. Therefore, Patent Document 1 (JPH07246504), for example, discloses an invention which prevents shavings or the like from entering into the interior of a pipe by mounting a plug member in the interior of an end of the pipe prior to thread cutting. The plug member disclosed by Patent Document 1 (JP07246504) has a seal member which fits in a groove provided in its outer peripheral surface.

However, mounting of the plug member in an end of a pipe and removal of the plug member from the end of the pipe must be carried out manually. Therefore, the plug member interferes with automation of the entire process of performing thread cutting of a pipe, and the time required for thread cutting increases.

Patent Document 2 (JPH07171701) discloses an invention in which a plug member having a groove provided in the outer peripheral surface of the body thereof is mounted in a pipe with a seal member fitted into the groove, a projecting grip for mounting and dismounting being attached to one end surface of the body of the plug member. According to that invention, the grip can be grasped by a mounting and dismounting device, so mounting of the plug member in the end of a pipe and removal of the plug member from the end of a pipe can be mechanized by a plug member mounting and dismounting device.
Patent Document 1: JP H07-246504 A (JPH 07246504)
Patent Document 2: JP H07-171701 A (JPH 07171701)

### Disclosure of Invention

### Problem Which the Invention is to Solve

In the invention disclosed in Patent Document 2 (JPH 07171701), a grip projects in a plug member mounted inside a pipe towards the portion of the pipe which is undergoing thread cutting, so shavings produced by thread cutting can easily be wrapped around the grip. If the plug member is removed from the end of a pipe with a mounting and dismounting device in a state in which shavings are wrapped around the grip, due to the presence of the shavings, it becomes difficult for the mounting and dismounting device to grasp the grip with certainty, and the plug member cannot be removed using the plug member mounting and dismounting device.

Furthermore, a mounting and dismounting device for a plug member according to that invention is installed in a pocket of a turret of a tool rest. Therefore, when mounting and dismounting of a plug member is performed on an end of a pipe, it is necessary to carry out two movements in the form of translation and rotation of the turret. As a result, the time required for mounting of the plug member increases and a drive mechanism for the device becomes complicated.

In addition, a pocket in which a mounting and dismounting device for a plug member according to that invention is installed can no longer be used for other purposes. Furthermore, the mounting and dismounting device for a plug member interferes with nearby pockets, and the nearby pockets can also no longer be used.

The problem which the present invention is to solve is that a plug member mounted in the end of a pipe for preventing shavings or the like from entering into the pipe cannot be removed with a mounting and dismounting device for a plug member.

Another problem which the present invention is to solve is that if mounting and dismounting of a plug member is carried out with a mounting and dismounting device, a prolonged time is required for mounting of the plug member, and the mounting and dismounting device interferes not only with the pocket in which the mounting and dismounting device for a plug member is installed but also with other nearby pockets, so the nearby pockets can no longer be used.

### Means for Solving the Problem

The present invention is a plug member to be mounted in an end of a pipe which is to undergo thread cutting,
comprising an outer tube having a proximal end and a distal end (leading end), a shuttle which is installed so as to be able to reciprocate inside the outer tube between the proximal end and the distal end, a cap which is mounted on the distal end of the outer tube to close off the opening of the distal end, and a shuttle biasing spring having one end secured to the cap and the other end secured to the shuttle,
the outer tube having a seal member which is provided on its outer peripheral surface and which forms a seal against a pipe, and a circumferential groove which is formed in its inner peripheral surface in the proximal end portion,
the shuttle being disposed in a predetermined position inside the proximal end portion of the outer tube and preferably having a fitting portion for positioning which is formed on the end face of the shuttle on the side of its proximal end, and
the shuttle biasing spring producing a spring pressing force on the shuttle towards the proximal end when the shuttle moves from the predetermined position towards the distal end.

From another aspect, the present invention is a plug member mounting and dismounting device for mounting the above-described plug member according to the present invention in a pipe or removing it from a pipe, comprising a tubular holding body which is disposed inside the outer tube so as to be able to move with respect to the outer tube in the axial direction of the outer tube, a rod which has a distal end portion with a conical shape which decreases in outer diameter from its proximal end towards its distal end and which is disposed inside the tubular holding body so as to be able to move with respect to the tubular holding body in the axial direction of the tubular holding body, moving means for independently moving the tubular holding body and the rod, and preferably a stopper which is installed forward of the plug member having its outer tube connected to the tubular holding body and which by abutting thereon the end surface of a pipe on which the plug member is mounted, can simultaneously perform alignment of the plug member and the pipe and mounting of the plug member with respect to the pipe,
wherein the tubular holding body has ball-receiving holes in a predetermined position into which balls which can engage with the circumferential groove of the outer tube can fit so as not to protrude outwards from the outer peripheral surface of the tubular holding body, and when it is inserted into the outer tube through the proximal end of the tube, its distal end can contact the end surface of the proximal end of the shuttle, the tubular body preferably having a fitting portion which is formed on its distal end portion so as to fit the fitting portion of the shuttle which is formed on its proximal end, and
the rod can make the balls protrude outwards from the outer peripheral surface of the tubular holding body and engage with the circumferential groove to connect the tubular holding body and the outer tube by moving relative to the tubular holding body so as to contact its distal end portion with the balls, and it can release the connection between the tubular holding body and the outer tube by moving relative to the tubular holding body so as to retracting its distal end portion from the balls and let the balls fit into the ball-receiving holes.

### Effects of the Invention

According to the present invention, because a plug member is mounted and dismounted by holding the interior of the plug member, shavings produced by thread cutting can be completely prevented from becoming wrapped around the plug member. Therefore, not only mounting of the plug member in the end of a pipe but also removal from the end of a pipe can be mechanized and automated by a plug member mounting and dismounting device.

In addition, according to the present invention, alignment of a pipe and mounting of a plug member in a pipe can be simultaneously performed. Therefore, the cycle time required for mounting and dismounting of a plug member can be shortened when considering the overall cycle time.

### Brief Explanation of the Drawings

Figure 1 is a longitudinal cross-sectional view of a plug member according to the present invention.
Figure 2 is a longitudinal cross-sectional view showing the main portion of a mounting and dismounting device for a plug member according to the present invention when a plug member according to the present invention is connected thereto and inserted into a long pipe.
Figure 3 is an overall view of a mounting and dismounting device for a plug member according to the present invention as viewed from the side.
Figure 4 is a sectional view taken along line A - A of Figure 3.
Figure 5 is a schematic view of a conventional end portion working device.
List of Referential Numerals
11: plug member; 12: outer tube; 12a: circumferential groove; 13: shuttle;
13a: recess; 14: cap; 15: shuttle biasing spring; 16a, 16b: seal members;
21: plug member mounting and dismounting device;
22: holding member; 22a: ball-receiving hole; 23: rod; 23a: end portion;
24, 25: moving means; 26: balls; 27: stopper

### Best Mode for Carrying Out the Invention

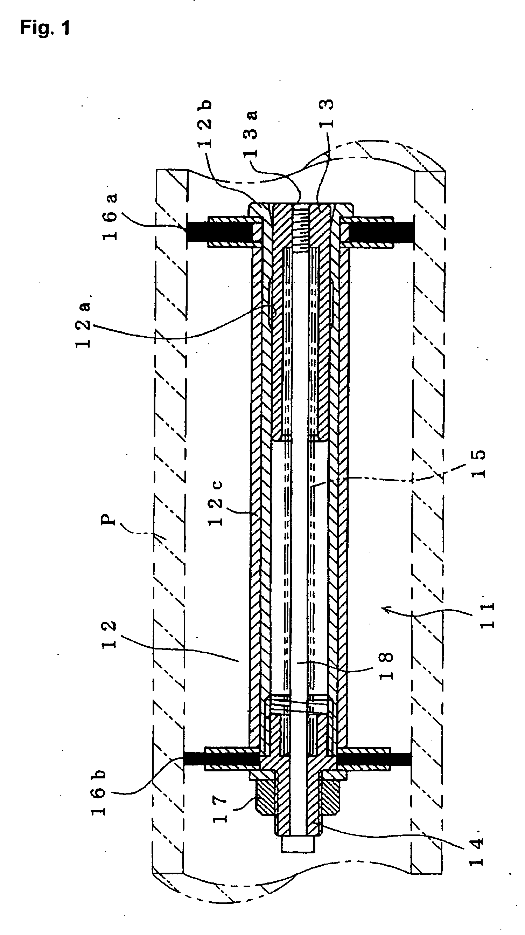

Below, the best mode for carrying out the present invention will be explained while referring to Figures 1 - 4. In the following explanation, an example will be given of the case in which a pipe is an oil country tubular good.

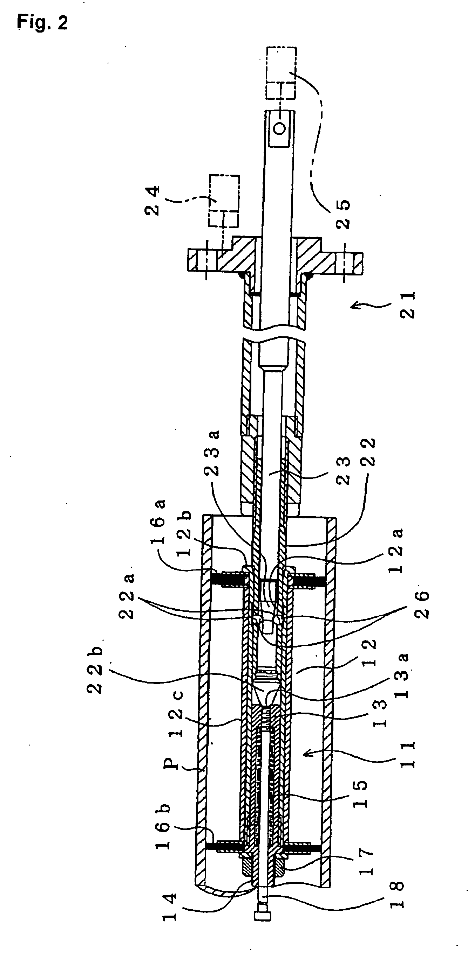

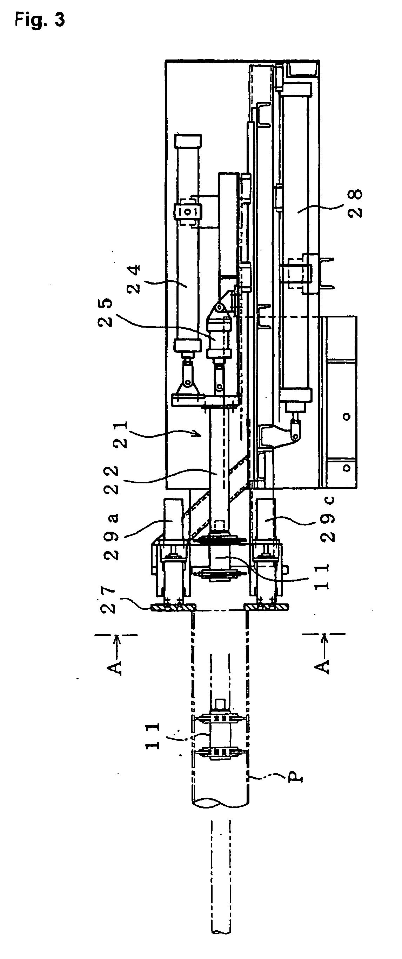

Figure 1 is a longitudinal cross-sectional view of a plug member according to the present invention. Figure 2 is a longitudinal cross-sectional view showing the main portion of a mounting and dismounting device for a plug member according to the present invention when it is connected to a plug member according to the present invention and inserted into a long pipe. Figure 3 is an overall view of a mounting and dismounting device for a plug member according to the invention as viewed from the side. Figure 4 is a sectional view taken along line A - A of Figure 3.

In Figure 1, 11 indicates a plug member according to the present invention which is mounted inside the end of an oil country tubular good P, for example, which is to undergo thread cutting. The plug member 11 comprises an outer tube 12, a shuttle 13, a cap 14, and a shuttle biasing spring 15.

The outer tube 12 has a proximal end (the end on the right side in Figure 1) and a distal or leading end (the end on the left side in Figure 1). The outer tube 12 has sealing members 16a and 16b which are made of hard rubber, for example, and which have a diameter slightly larger than the inner surface of an oil country tubular good P in which the plug member is mounted on the outer peripheral surface of the tube in positions near both ends thereof. The sealing members 16a and 16b are sealed against the oil country tubular good P. A circumferential groove 12a is provided on the inner peripheral surface of the outer tube 12 near the proximal end (the side on which sealing member 16a is mounted). Below-described balls 26 engage with the circumferential groove 12a.

In the embodiment shown in Figure 1, sealing member 16a is positioned on the outer peripheral surface of the outer tube 12 by an outwardly extending flange of a tubular body 12b, and sealing member 16b is positioned on the outer peripheral surface of the outer tube 12 by a spacer sleeve 12c disposed between it and sealing member 16a.

The shuttle 13 is normally disposed inside the outer tube 12 near the proximal end. The shuttle 13 can move inside the outer tube between the proximal end and the distal end (the opposite end from the proximal end). In the embodiment shown in Figure 1, the end surface of the shuttle 13 on the side of the proximal end has a recess 13a which serves as a fitting portion for positioning and which is formed in a conical shape having a flat top face and an inner diameter which decreases from the proximal end towards the distal end.

The cap 14 is secured by a screw to the distal end of the outer tube 12 to close off the opening formed at the distal end of the outer tube 12. By securing the cap 14 with a nut 17, the sealing members 16a and 16b in this embodiment can be secured and positioned in the above-described positions.

The shuttle biasing spring 15 is disposed inside the outer tube 12 with one of its ends secured to the cap 14 and its other end secured to the shuttle 13. The shuttle biasing spring 15 biases the shuttle 13 so that when the below-described plug member mounting and dismounting device is not connected to the plug member, the shuttle 13 is positioned inside the outer tube 12 in the proximal end portion (at the position shown in Figure 1). In the embodiment shown in Figure 1, a bolt 18 which passes through a through hole provided in the center of the cap 14 is screwed into the shuttle 13, and the shuttle 13 is positioned in the proximal end of the outer tube 12 by adjusting the amount of threaded engagement of the bolt.

A plug member 11 of this embodiment is constituted as described above. Next, a plug member mounting and dismounting device 21 of this embodiment will be explained.

A plug member 11 of this embodiment is automatically mounted and dismounted in the end of an oil country tubular good P by the plug member mounting and dismounting device 21 according to the present invention shown in Figure 2 and Figure 3. The plug member mounting and dismounting device 21 comprises a tubular holding body 22, a rod 23, and moving means 24 and 25 for independently moving the tubular holding body 22 and the rod 23.

The tubular holding body 22 has an outer diameter which is slightly smaller than the inner diameter of the outer tube 12 of the plug member 11. It is inserted into the interior of the outer tube 12 of the plug member 11 through the proximal end of the outer tube 12, and it can be freely moved in the interior of the outer tube 12 in the axial direction of the outer tube 12 by a moving means such as an actuator 24 in order to support the plug member 11 by so-called cantilever supporting.

Four (for example) ball-receiving holes 22a are provided in predetermined locations of the tubular holding body 22, and a ball 26 fits into each of these ball-receiving holes 22a. The balls 26 have dimensions which allow them to be able to engage with the circumferential groove 12a provided in the inner peripheral surface of the outer tube 12. The balls 26 are housed in the ball-receiving holes 22a so as not to protrude outwards from the outer peripheral surface of the tubular holding body 22.

In the embodiment shown in Figure 2, a conical cap 22b which can fit into the positioning recess 13a provided in the above-described shuttle 13 is attached to the tip (distal end) of the tubular holding body 22. It ensures positioning of the tubular holding body 22 with respect to the plug member 11.

The rod 23 is disposed inside the tubular holding body 22. The rod 23 can be moved inside the tubular holding body 22 with respect to the tubular holding body 22 in its axial direction by a moving means such as an actuator 25. The distal end portion 23 a of the rod 23 has a conical shape with an outer diameter which decreases from the proximal end towards the distal end.

First, the tubular holding body 22 is moved with respect to the outer tube 12 by operating an actuator 24 until the ball-receiving holes 22a provided in the tubular holding body 22 are aligned with the circumferential groove 12a provided in the outer tube 12. Next, the rod 23 is moved with respect to the tubular holding body 22 which is moved and stopped as described above by operating an actuator 25 until the conical end portion 23a of the rod 23 contacts the balls 26. As a result, the balls 26 are made to protrude outwards from the outer peripheral surface of the tubular holding body 22. This causes the balls 26 to engage with the circumferential groove 12a, whereby the tubular holding body 22 and the outer tube 12 are connected to each other.

With the tubular holding body 22 and the outer tube 12 connected in this manner, the rod 23 is moved backwards with respect to the tubular holding body 22 to move the conical end portion 23a of the rod 23 away from the balls 26, and the balls 26 are caused to fit into the ball-receiving holes 22a, thereby releasing the connection between the tubular holding body 22 and the outer tube 12.

As shown in Figure 3 and Figure 4, in this embodiment, a stopper 27 is disposed forward of the plug member 11 having the outer tube 12 connected to the tubular holding body 22. By abutting thereon the end surface of an oil country tubular good P in which the plug member 11 is to be mounted, the stopper 27 simultaneously carries out alignment of the plug member 11 and the oil country tubular good P and mounting (placement) of the plug member 11 with respect to the oil country tubular good P. As shown in Figure 4, the stopper 27 has the shape of a diamond in which adjoining vertices have different angles and in which the corners are rounded so that alignment (axial alignment) of an oil country tubular good P and the tubular holding body 22 can be carried out even when there is deviation of the center at the end of the oil country tubular good P from the center of the tubular holding body 22 due to bending or the like of the tubular good P.

The stopper 27 is supported by an actuator 28. The cycle time required for positioning of an oil country tubular good P at the time of mounting of a plug member 11 can be further decreased if the actuator 28 is operated to position the stopper 27 in a predetermined position.

29a - 29d in Figure 3 and Figure 4 are shock absorbers which support the stopper 27. They absorb shocks when an oil country tubular good P strikes the stopper 27 at the time of positioning of the oil country tubular good P.

In the prior art with an apparatus such as a lathe including a plug member mounting and dismounting device, in a preliminary step before a plug member is inserted into a long pipe, the long pipe is first transported in its lengthwise direction into the plug member mounting and dismounting device, and then after the pipe is positioned in its lengthwise direction, the plug member is mounted in the pipe. At this time, a positioning stopper has to be operated by a cylinder from a direction other than the direction of transport of the pipe (such as from above or below) due to the presence of the plug member mounting and dismounting device which is positioned to the rear of the stopper in the lengthwise direction of the pipe (on the opposite side from the direction of transport of the pipe).

Accordingly, the length of operational movement of the cylinder is necessarily long and hence considerable time is required for taking in and out of the stopper. Furthermore, at the time of positioning of the pipe, an external force acts on the stopper in a different direction from the direction of operation due to impact with the pipe, and positional deviation of the stopper or equipment malfunctions frequently occurred.

In contrast, in this embodiment, a stopper 27, which performs positioning of an oil country tubular good P in which a plug member 11 is to be mounted on the end by causing it to abut on the end surface of the tubular good P, is disposed forward of the plug member 11 which is connected to the tubular holding body 22 in a state combined with the plug member mounting and dismounting device 21. Therefore, the time required for taking in and out of the stopper 27 by a cylinder or the like can be omitted. Furthermore, the stopper 27 is not moved in a direction other than the direction of transport of an oil country tubular good P. Accordingly, an external force due to impact with an oil country tubular good P at the time of positioning does not act on the stopper 27, and it is difficult for malfunctions and the like of the stopper 27 to take place.

Next, mounting of a plug member 11 according to the present invention in an end of an oil country tubular good P by a plug member mounting and dismounting device 21 according to the present invention will be explained.

First, after positioning of an oil country tubular good P is carried out, the vicinity of the end of the oil country tubular good P is supported by a floating chuck or the like with the axis of the portion of the pipe end which is to undergo working aligned with the rotational axis of the main shaft of a lathe. As a result, the axes of the pipe and an inside plug are aligned. The plug member 11 and the plug member mounting and dismounting device 21 are connected as shown in Figure 2 by inserting the tubular holding body 22 of the device 21 into the outer tube 12 of the plug member 11 until the ball-receiving holes 22a of the body 22 are aligned with the circumferential groove 12a of the outer tube 12 and in that state, then inserting the rod 23 into the tubular holding body 22 as described above.

Then, the actuator 24 is operated to advance the plug member mounting and dismounting device 21 which is connected to the plug member 11 such that the plug member 11 is inserted into the end portion of the oil country tubular good P as shown in Figure 2.

After the plug member 11 is inserted, the tubular holding body 22 and the outer tube 12 are separated from each other by moving the rod 23 backwards with respect to the tubular holding body 22, whereby the connection between the plug member mounting and dismounting device 21 and the plug member 11 is released. The actuator 24 is then operated to move the plug member mounting and dismounting device 21 backwards while leaving the plug member 11 inside the oil country tubular good P, and the mounting and dismounting device is pulled out of the oil country tubular good P. Then, thread cutting is carried out on a predetermined portion of the oil country tubular good P.

After thread cutting is carried out in this manner, the plug member 11 is pulled out of the end of the oil country tubular good P by carrying out the opposite of the above-described operation.

The plug member 11 of this embodiment is mounted and dismounted by holding the interior of the plug member 11. Therefore, the problem of shavings produced by thread cutting becoming wrapped around the plug member 11 is completely eliminated.

In this embodiment, the plug member mounting and dismounting device 21 can carry out positioning of the oil country tubular good P and mounting and dismounting of the plug member 11 in the end of the oil country tubular good P just by forwards and backwards movements without performing rotational movement.

## Claims

1. A plug member (11) which is mountable inside an end portion of a pipe (P) which is to undergo thread cutting,
**characterized by** comprising an outer tube (12) having a proximal end and a distal end, a shuttle (13) which is installed so as to be able to reciprocate inside the outer tube (12) between the proximal end and the distal end, a cap (14) which is mounted on the distal end of the outer tube (12) to close off the opening of the distal end, and a shuttle biasing spring (15) having one end secured to the cap (14) and the other end secured to the shuttle (13),
wherein the outer tube (12) has a seal member (16a,16b) which is provided on its outer peripheral surface and which forms a seal against the pipe (P), and a circumferential groove (12a) which is formed in the inner peripheral surface of the tube (12) in the proximal end portion,
the shuttle (13) is disposed in a predetermined position inside the proximal end portion of the outer tube (12), and
the shuttle biasing spring (15) produces a spring pressing force on the shuttle (13) towards the proximal end when the shuttle (13) moves from the predetermined position towards the distal end.

2. A plug member (11) as set forth in claim 1 **characterized in that** the shuttle (13) has a fitting portion (13a) for positioning formed on the end surface of the shuttle (13) on the side of the proximal end.

3. A plug member mounting and dismounting device (21) for mounting a plug member (11) as set forth in claim 1 or claim 2 in a pipe (P) or removing it from a pipe (P),
**characterized by** comprising a tubular holding body (22) which is disposed inside the outer tube (12) so as to be able to move with respect to the outer tube (12) in the axial direction of the outer tube (12), a rod (23) which has a distal end portion (23a) with a conical shape which decreases in outer diameter from its proximal end towards its distal end and which is disposed inside the tubular holding body (22) so as to be able to move with respect to the tubular holding body (22) in the axial direction of the tubular holding body (22), and moving means (24, 25) for independently moving the tubular holding body (22) and the rod (23),
wherein the tubular holding body (22) has balls (26) housed in ball-receiving holes (22a) in a predetermined position into which balls (26), which can engage with the circumferential groove (12a) of the outer tube (12) can fit, so as not to protrude outwards from the outer peripheral surface of the tubular holding body (22), and when it is inserted into the outer tube (12) through the proximal end of the tube (12), its distal end can contact the end surface of the proximal end of the shuttle (13), and
the rod (23) can make the balls (26) protrude outwards from the outer peripheral surface of the tubular holding body (22) and engage with the circumferential groove (12a) to connect the tubular holding body (22) and the outer tube (12) by moving relative to the tubular holding body (22) so as to contact its distal end portion with the balls (26), and it can release the connection between the tubular holding body (22) and the outer tube (12) by moving relative to the tubular holding body (22) so as to retracting its distal end portion portion from the balls (26) and let the balls (26) fit into the ball-receiving holes (22a).

4. A plug member mounting and dismounting device (21) as set forth in claim 3 **characterized by** having a fitting portion (22b) which is formed on the distal end of the tubular holding body (22) and which fits into a fitting portion (13a) for positioning formed on the end surface of the shuttle (13) on the side of the proximal end.

5. A plug member mounting and dismounting device (21) as set forth in claim 3 or claim 4 **characterized by** further having a stopper (27) which is installed forward of the plug member (11) having the outer tube (12) connected to the tubular holding body (22), the stopper (27) performing, by abutting thereon the end surface of a pipe (P) in which the plug member (11) is to be mounted, alignment of the plug member (11) and the pipe (P) and mounting of the plug member (11) with respect to the pipe (P) simultaneously.

## Patentansprüche

1. Stopfenelement (11), das in einen Endabschnitt eines Rohrs (P), der einem Gewindeschneiden zu unterziehen ist, montierbar ist,
**gekennzeichnet durch** Umfassen einer Außenröhre (12) mit einem proximalen Ende und einem distalen Ende, einem Schlitten (13), der so eingebaut ist, dass er sich in der Außenröhre (12) zwischen dem proximalen Ende und dem distalen Ende hin- und herbewegen kann, einer Kappe (14), die an dem distalen Ende der Außenröhre (12) montiert ist, um die Öffnung des distalen Endes zu verschließen, und einer Schlittenvorspannfeder (15), die mit einem Ende an der Kappe (14) gesichert ist und mit dem anderen Ende an dem Schlitten (13) gesichert ist,
wobei die Außenröhre (12) ein Abdichtelement (16a, 16b), das an ihrer Außenumfangsfläche vorgesehen ist und das eine Abdichtung gegenüber dem Rohr (P) bildet, und eine Umfangsnut (12a), die in der Innenumfangsfläche der Röhre (12) in dem proximalen Endabschnitt ausgebildet ist, aufweist,
wobei der Schlitten (13) in einer vorbestimmten Position in dem proximalen Endabschnitt der Außenröhre (12) angeordnet ist und
wobei die Schlittenvorspannfeder (15) eine Federpresskraft auf den Schlitten (13) hin zu dem proximalen Ende erzeugt, wenn sich der Schlitten (13) von der vorbestimmten Position hin zu dem distalen Ende bewegt.

2. Stopfenelement (11) nach Anspruch 1, **dadurch gekennzeichnet, dass** der Schlitten (13) einen Passabschnitt (13a) zum Positionieren, der an der Endfläche des Schlittens (13) an der Seite des proximalen Endes ausgebildet ist, aufweist.

3. Stopfenelement-Montage- und Demontagevorrichtung (21) zum Montieren eines Stopfenelements (11) nach Anspruch 1 oder 2 in einem Rohr (P) oder zum Entfernen desselben von einem Rohr (P),
**gekennzeichnet durch** Umfassen eines rohrförmigen Haltekörpers (22), der in der Außenröhre (12) angeordnet ist, um sich bezüglich der Außenröhre (12) in der axialen Richtung der Außenröhre (12) bewegen zu können, eines Stabs (23), der einen distalen Endabschnitt (23a) mit einer konischen Form aufweist, dessen Außendurchmesser von seinem proximalen Ende hin zu seinem distalen Ende abnimmt und der in dem rohrförmigen Haltekörper (22) angeordnet ist, um sich bezüglich des rohrförmigen Haltekörpers (22) in der axialen Richtung des rohrförmigen Haltekörpers (22) bewegen zu können, und von Bewegungsmitteln (24, 25) zum unabhängigen Bewegen des rohrförmigen Haltekörpers (22) und des Stabs (23),
wobei der rohrförmige Haltekörper (22) Kugeln (26) aufweist, die in Kugelaufnahmelöchern (22a) an einer vorbestimmten Position aufgenommen sind, in die Kugeln (26), die mit der Umfangsnut (12a) der Außenröhre (12) in Eingriff treten können, passen können, um nicht von der Außenumfangsfläche des rohrförmigen Haltekörpers (22) nach außen abzustehen, und, wenn er durch das proximale Ende der Röhre (12) in die Außenröhre (12) eingeführt wird, sein distales Ende die Endfläche des proximalen Endes des Schlittens (13) kontaktieren kann, und
wobei der Stab (23) die Kugeln (26) von der Außenumfangsfläche des rohrförmigen Haltekörpers (22) nach außen abstehen lassen kann und mit der Umfangsnut (12a) in Eingriff treten kann, um den rohrförmigen Haltekörper (22) und die Außenröhre (12) **durch** Bewegen relativ zu dem rohrförmigen Haltekörper (22), so dass sein distaler Endabschnitt mit den Kugeln (26) in Kontakt gerät, zu verbinden, und er die Verbindung zwischen dem rohrförmigen Haltekörper (22) und der Außenröhre (12) **durch** Bewegen relativ zu dem rohrförmigen Haltekörper (22), um seinen distalen Endabschnitt von den Kugeln (26) zurückzuziehen, lösen und die Kugeln (26) in die Kugelaufnahmelöcher (22a) passen lassen kann.

4. Stopfenelement-Montage- und Demontagevorrichtung (21) nach Anspruch 3, **gekennzeichnet durch** Aufweisen eines Passabschnitts (22b), der an dem distalen Ende des rohrförmigen Haltekörpers (22) ausgebildet ist und der in einen Passabschnitt (13a) zum Positionieren, der an der Endfläche des Schlittens (13) an der Seite des proximalen Endes ausgebildet ist, passt.

5. Stopfenelement-Montage- und Demontagevorrichtung (21) nach Anspruch 3 oder 4, **gekennzeichnet durch** weiteres Aufweisen eines Anschlags (27), der vor dem Stopfenelement (11) eingebaut ist, das die Außenröhre (12) mit dem rohrförmigen Haltekörper (22) verbunden aufweist, wobei der Anschlag (27) durch Anliegen daran der Endfläche eines Rohrs (P), in das das Stopfenelement (11) zu montieren ist, eine Ausrichtung des Stopfenelements (11) und des Rohrs (P) und das Montieren des Stopfenelements (11) bezüglich des Rohrs (P) gleichzeitig durchführt.

## Revendications

1. Elément de bouchon (11) qui peut être monté à l'intérieur d'une partie d'extrémité d'un tuyau (P) qui doit subir un filetage,
**caractérisé en ce qu'**il comporte un tube extérieur (12) ayant une extrémité proximale et une extrémité distale, une navette (13) qui est installée de façon à pouvoir aller et venir à l'intérieur du tube extérieur (12) entre l'extrémité proximale et l'extrémité distale, un capuchon (14) qui est monté sur l'extrémité distale du tube extérieur (12) pour obturer l'ouverture de l'extrémité distale, et un ressort de rappel de navette (15) ayant une extrémité fixée au capuchon (14) et l'autre extrémité fixée à la navette (13),
dans lequel le tube extérieur (12) comporte un élément d'étanchéité (16a, 16b) qui est prévu sur sa surface périphérique extérieure et qui forme un joint d'étanchéité contre le tuyau (P), et une rainure circonférentielle (12a) qui est formée dans la surface périphérique interne du tube (12) de la partie d'extrémité proximale,
la navette (13) est disposée dans une position prédéterminée à l'intérieur de la partie d'extrémité proximale du tube extérieur (12), et
le ressort de rappel de navette (15) produit une force de pression du ressort sur la navette (13) en direction de l'extrémité proximale lorsque la navette (13) se déplace de la position prédéterminée vers l'extrémité distale.

2. Elément de bouchon (11) selon la revendication 1, **caractérisé en ce que** la navette (13) comporte une partie d'ajustage (13a) pour le positionnement formée sur la surface d'extrémité de la navette (13) sur le côté de l'extrémité proximale.

3. Dispositif de montage et démontage d'un élément de bouchon (21) pour monter un élément de bouchon (11) selon la revendication 1 ou la revendication 2 dans un tuyau (P) ou le retirer d'un tuyau (P),
**caractérisé en ce qu'**il comporte un corps de retenue tubulaire (22) qui est disposé à l'intérieur du tube extérieur (12) de manière à pouvoir se déplacer par rapport au tube extérieur (12) dans la direction axiale du tube extérieur (12), une tige (23) qui a une partie d'extrémité distale (23a) ayant une forme conique qui diminue de diamètre externe à partir de son extrémité proximale vers son extrémité distale et qui est disposée à l'intérieur du corps de retenue tubulaire (22) de manière à pouvoir se déplacer par rapport au corps de retenue tubulaire (22) dans la direction axiale du corps de retenue tubulaire (22), et des moyens de déplacement (24, 25) pour déplacer de façon indépendante le corps de retenue tubulaire (22) et la tige (23),
dans lequel le corps de retenue tubulaire (22) dispose de billes (26) contenues dans des trous de réception de billes (22a) dans une position prédéterminée dans laquelle des billes (26) qui peuvent venir en prise avec la rainure circonférentielle (12a) du tube extérieur (12) peuvent s'ajuster de manière à ne pas faire saillie vers l'extérieur depuis la surface périphérique extérieure du corps de retenue tubulaire (22), et lorsqu'il est inséré dans le tube extérieur (12) à travers l'extrémité proximale du tube (12), son extrémité distale peut entrer en contact avec la surface d'extrémité de l'extrémité proximale de la navette (13), et
la tige (23) peut amener les billes (26) à faire saillie vers l'extérieur depuis la surface périphérique extérieure du corps de retenue tubulaire (22) et à être mises en prise avec la rainure périphérique (12a) pour relier le corps de retenue tubulaire (22) et le tube extérieur (12) en se déplaçant par rapport au corps de retenue tubulaire (22) de façon à mettre en contact sa partie d'extrémité distale avec les billes (26), et elle peut libérer la connexion entre le corps de retenue tubulaire (22) et le tube extérieur (12) en se déplaçant par rapport au corps de retenue tubulaire (22) de manière à rétracter sa partie d'extrémité distale des billes (26) et à laisser les billes (26) s'ajuster dans les trous de réception de billes (22a).

4. Dispositif de montage et démontage d'un élément de bouchon (21) selon la revendication 3, **caractérisé en ce qu'**il comprend une partie d'ajustage (22b) qui est formée sur l'extrémité distale du corps de retenue tubulaire (22) et qui s'ajuste dans une partie d'ajustage (13a) pour le positionnement formée sur la surface d'extrémité de la navette (13) sur le côté de l'extrémité proximale.

5. Dispositif de montage et démontage d'un élément de bouchon (21) selon la revendication 3 ou la revendication 4, **caractérisé en ce qu'**il comprend en outre une butée (27) qui est installée à l'avant de l'élément de bouchon (11) ayant le tube extérieur (12) relié au corps de retenue tubulaire (22), la butée (27) exécutant, en amenant en butée sur celle-ci la surface d'extrémité d'un tuyau (P) dans lequel l'élément de bouchon (11) doit être monté, l'alignement de l'élément de bouchon (11) et du tuyau (P) et le montage de l'élément de bouchon (11) par rapport au tuyau (P) simultanément.
